# EUROPÄISCHE PATENTSCHRIFT

(11) **EP 4 442 615 B1**
(45) Veröffentlichungstag und Bekanntmachung des Hinweises auf die Patenterteilung: **01.04.2026**
(21) Anmeldenummer: 24157336.9
(22) Anmeldetag: 13.02.2024
(51) Int. Cl.: B65G 1/137, B65G 1/06

(54) **REGALSYSTEM**
SHELF SYSTEM
SYSTÈME DE RAYONNAGE

(30) Priorität: 06.04.2023 DE 102023203215
(43) Veröffentlichungstag der Anmeldung: 09.10.2024
(73) Patentinhaber: MAGNA STEYR Fahrzeugtechnik GmbH & Co KG, 8041 Graz (AT)
(72) Erfinder: HAMMERSCHMID, Gerhard, 8160 Weiz (AT); KRAUSER, Gerhard, 8403 Lang (AT); MEISTERL, Maximilian, 8010 Graz (AT); TRUMMER, Wolfgang, 8020 Graz (AT); WIELAND, Christian, 8073 Feldkirchen bei Graz (AT)
(74) Vertreter: Zangger, Bernd

(56) Entgegenhaltungen:
- EP-B1- 1 231 164
- WO-A1-2007/134840
- US-A1- 2009 136 328
- US-A1- 2020 231 385

## Beschreibung

### Gebiet der Erfindung

Die vorliegende Erfindung betrifft ein Regalsystem zur Sequenzierung von Waren aus einem Hochregallager in Sequenzierungsgestelle.

### Stand der Technik

Es ist bekannt, dass Waren in einem vollautomatischen Hochregallager in mehreren Ebenen gelagert sein können, welches durch ein Regalbediengerät bewirtschaftet wird, so dass jeweils gewünschte Waren aus dem Hochregallager zu einem Arbeitsplatz auf Bodenebene befördert werden und auch neue Waren, oder zwar zum Arbeitsplatz gelieferte aber am Arbeitsplatz nicht verwendete Waren, wieder in das Hochregallager eingeordnet werden können.

Ferner ist bekannt, dass in einem Prozess der Sequenzierung, mehrere sortenreine Ladeinheiten, im Folgenden Großladungsträger genannt, in welchen jeweils Waren eines Warentyps aufgenommen und vorrätig sind, auf einer Bodenebene bereitgestellt werden und eine Person einzelne Teile oder Kleinladungsträger aus den bereitgestellten Großladungsträgern entnimmt und diese auf einen gemeinsamen Ladungsträger, nämlich in ein Sequenzierungsgestell, legt.

Dazu werden üblicherweise viele Großladungsträger gleichzeitig auf der Bodenebene bereitgestellt, so dass die Waren zu mehreren Sequenzierungsaufträgen aus den Großladungsträgern entnommen werden können.

Ein derartiger Sequenzierungsprozess ist mit mehreren Nachteilen verbunden: Es gibt lange Gehwege für die Personen - Sequenzierer - zwischen mehreren Sequenzierungsbereichen, lange Gehwege in einem Sequenzierungsbereich während dem Sequenzieren, einen hohen Flächenbedarf zur Bereitstellung von vielen benötigten Waren, zum Beispiel Teilevarianten, sowie ein hohes Risiko für Verletzungen, da die Arbeitsbereiche für Stapler und Sequenzierer zusammenfallen.

Aus der WO 2007/134840 A1, welche die Merkmale des Oberbegriffs des Anspruchs 1 offenbart, ist ein Regallager bekannt zum Kommissionieren von in Ladehilfsmitteln, insbesondere auf Tablaren, gelagerten Waren, mit zumindest einem Regal mit einer ersten und zweiten Längsseite und zwei Stirnseiten, wobei das Regal zumindest eine Regalebene aufweist, wobei jede Regalebene eine Vielzahl von Regalzeilen aufweist, wobei die Regalzeilen übereinander angeordnet sind und jeweils eine Vielzahl von nebeneinander angeordneten Regalplätzen umfassen, mit zumindest einem Regalbediengerät pro Regalebene, das zumindest ein Lastaufnahmemittel zum Einlagern und Auslagern von Ladehilfsmitteln in die bzw. aus den Regalplätzen einer Regal ebene aufweist, wobei das Regalbediengerät in horizontaler und vertikaler Richtung entlang der ersten Längsseite des Regals verfahrbar ist, um in seiner Regalebene Ladehilfsmittel einzulagern und auszulagern, und mit mehreren vertikalen Lifteinheiten, die an der zweiten Längsseite des Regals angeordnet sind und die ein Lastaufnahmemittel zum Abholen und Abgeben von Ladehilfsmitteln von bzw. an Transferregallagerplätzen aufweisen.

Die US 2020/231385 A1 offenbart ein Arbeitszellensystem zur Auftragsabwicklung, das umfasst: eine erste Arbeitsstation mit Stellen zum Bereitstellen von zwei oder mehr ersten Ursprungsbehältern und einem oder mehreren ersten Zielbehältern; und eine zweite Arbeitsstation mit Stellen zum Bereitstellen von zwei oder mehreren zweiten Ursprungsbehältern und einem oder mehreren zweiten Zielbehältern, wobei die erste Arbeitsstation in der Nähe der zweiten Arbeitsstation liegt, so dass ein einziger Bediener sowohl die erste Arbeitsstation als auch die zweite Arbeitsstation bedienen kann.

### Zusammenfassung der Erfindung

Es ist eine Aufgabe der Erfindung, ein Regalsystem zur Sequenzierung von Waren anzugeben, das zumindest einige der genannten Probleme reduziert. Insbesondere sollen kürzere Gehwege und damit auch raschere, effiziente Sequenzierungen ermöglicht werden.

Die Lösung der Aufgabe erfolgt durch ein Regalsystem zur Sequenzierung von Waren aus einem Hochregallager in Sequenzierungsgestelle mit den Merkmalen gemäß Anspruch 1.

Das Regalsystem umfasst ein Hochregallager mit zumindest einer Sequenzierungsebene, insbesondere in einer Bodenebene, und mehreren Lagerebenen, wobei an Stellplätzen in den Lagerebenen im Normalbetrieb des Regalsystems Großladungsträger gelagert sind, in welchen jeweils Waren eines Warentyps aufgenommen sind, wobei zumindest ein Lift zur vertikalen Beförderung der Großladungsträger im Hochregallager angeordnet ist, wobei das Regalsystem in jeder Lagerebene zumindest einen Querverschiebewagen zur horizontalen Beförderung der Großladungsträger umfasst, wobei das Regalsystem eine Steuereinheit umfasst, wobei die Steuereinheit dazu eingerichtet ist, Sequenzierungsaufträge derart abzuarbeiten, dass die erforderlichen Großladungsträger für einen Sequenzierungsauftrag aus den Lagerebenen an zumindest einen zweiten Sequenzierungsbereich in der Sequenzierungsebene zugestellt werden, während Waren aus den erforderlichen Großladungsträgern für einen anderen Sequenzierungsauftrag in einem ersten Sequenzierungsbereich in der Sequenzierungsebene in ein Sequenzierungsgestell des ersten Sequenzierungsbereichs eingeordnet werden und umgekehrt, so dass die erforderlichen Großladungsträger für einen Sequenzierungsauftrag aus den Lagerebenen an den ersten Sequenzierungsbereich in der Sequenzierungsebene zugestellt werden, während Waren aus den erforderlichen Großladungsträgern für einen anderen Sequenzierungsauftrag in dem zweiten Sequenzierungsbereich in der Sequenzierungsebene in ein Sequenzierungsgestell des zweiten Sequenzierungsbereichs eingeordnet werden.

Erfindungsgemäß wird durch ein automatisiertes Hochregal einem Mitarbeiter oder einem Roboter, also einem "Sequenzierer" der die einzelnen Waren aus Großladungsträgern (GLT) in ein Sequenzierungsgestell einordnet, genau das für den nächsten Sequenzierungsvorgang /-auftrag erforderliche Material bzw. Bauteil, also die entsprechenden, benötigten Großladungsträgern für den Sequenzierungsauftrag, in einem Sequenzierungsbereich bereitgestellt. Dabei können zwei oder mehrere Sequenzierungsbereiche wechselweise von einer Person bewirtschaftet werden. Während der Sequenzierung in einem Sequenzierungsbereich, erfolgt ein Materialwechsel, also die Zustellung erforderlicher Großladungsträger, in zumindest einem anderen Sequenzierungsbereich. Der Sequenzierer wird durch die Materialzustellung im anderen Sequenzierungsbereich nicht von seiner Sequenziertätigkeit aufgehalten und kann dann zu dem inzwischen vorbereiteten anderen Sequenzierungsbereich wechseln, der sich bevorzugt gleich neben dem zuvor bearbeiteten Sequenzierungsbereich befinden kann. Der Materialwechsel beinhaltet nicht nur die Zustellung der für den nächsten Sequenzierungsauftrag erforderlichen Großladungsträger, sondern auch die Abholung der nicht mehr benötigten, aus dem vorhergehenden Sequenzierungsauftrag stammenden Großladungsträger.

Für die Bereitstellung der Waren werden die senkrechten und waagrechten Bewegungen auf mehrere mechanischen Komponenten aufgeteilt, nämlich auf zumindest einen Heber, also Lift, und Querverschiebewagen (QVW) für die horizontalen Bewegungen in den Etagen, wodurch die Bereitstellung und Rückführung mehrerer Ladungsträger gleichzeitig nach unterschiedlich langer Bereitstellungsdauer in Sequenzierungsbereichen, innerhalb des Lagers durchgeführt werden kann.

Der Prozess der Sequenzierung wird somit so effizient wie möglich gestaltet. Die benötigte Fläche für die Bereitstellung der vielen unterschiedlichen Teilevarianten wird reduziert und die Gehwege für den Sequenzierer werden minimiert. Dabei wird ein "Ware zu Person" Konzept angewendet und als positiver Nebeneffekt das Gefahrenpotential zwischen Stapler und Arbeiter reduziert.

Als "Sequenzierungsebene" wird eine Ebene bezeichnet, die mindestens einen Sequenzierungsbereich aufweist. Die Sequenzierung kann optional nicht nur innerhalb einer Ebene erfolgen, sondern kann auch auf unterschiedlichen Ebenen angeordnet sein, so dass mehrere Ebenen eines Regals Sequenzierungsebenen bilden können.

Die "Bodenebene" und unterste Ebene des Regalsystems kann bevorzugt eine Sequenzierungsebene darstellen, jedoch können alternativ oder zusätzlich andere Ebenen des Regals eine Sequenzierungsebene bilden. Die Sequenzierung kann in einer anderen Ebene erfolgen, beispielsweise auch dann, wenn das Hochregallager nicht auf dem allg. Hallenbodenniveau gestellt ist, sondern beispielsweise weiter unten, tiefer im Boden beginnt und nur ein Teil des Hochregallagers über den Hallenbodenniveau herausragt. Auch kann die Sequenzierungsebene nicht die unterste Ebene sein, sondern beispielsweise irgendwo vertikal in der Mitte oder auch die oberste Ebene des Regals sein.

Eine "Sequenzierungsebene", insbesondere auch die Bodenebene, kann auch nicht ausschließlich als "Sequenzierungsebene" ausgebildet sein, sondern kann auch als "Lagerebene" ausgebildet sein. Somit kann eine Ebene gleichzeitig eine Sequenzierungsebene und eine Lagerebene bilden, beispielsweise die Bodenebene.

In dieser Schrift wird unter "Großladungsträger" eine Ladeeinheit mit Waren bzw. Material verstanden, im Unterschied beispielsweise zu dem Ladungsträger "Sequenzierungsgestell".

Vorzugsweise umfasst jeder Sequenzierungsbereich zumindest einen Stellplatz für Großladungsträger, bevorzugt zumindest zwei Stellplätze, insbesondere drei bis zehn Stellplätze für Großladungsträger, insbesondere sechs Stellplätze für Großladungsträger. Die Wege für den Sequenzierer werden dadurch nicht zu lange.

Erfindungsgemäß ist der Lift oder die Lifte, entlang der Längserstreckung des Hochregallagers, im Inneren des Hochregallagers, vorzugsweise mittig, angeordnet, sodass an einer Seite des Lifts der erste Sequenzierungsbereich angeordnet ist und an der anderen Seite des Lifts der zweite Sequenzierungsbereich angeordnet ist.

Das Regalsystem umfasst in jeder Lagerebene zumindest einen, vorzugsweise zwei Querverschiebewagen zur horizontalen Beförderung der Großladungsträger, wobei jeweils ein Querverschiebewagen für die Beförderung der Großladungsträger in der Lagerebene an einer Seite des Lifts eingerichtet ist und der andere Querverschiebewagen für die Beförderung der Großladungsträger in der Lagerebene an der anderen Seite des Lifts eingerichtet ist. In einer bevorzugten Ausführung ist in jeder Lagerebene jeweils nur ein Querverschiebewagen und sind in einer Sequenzierungsebene oder in einer kombinierten Lager- und Sequenzierungsebene zwei Querverschiebewagen eingesetzt. In einer anderen Variante sind in den reinen Lagerebenen zur Erhöhung des Durchsatzes an Großladungsträgern zwei Querverschiebewagen pro Ebene vorgesehen.

Das Hochregallager ist erfindungsgemäß als doppeltes Regal ausgeführt, so dass es ein vorderes Hochregal und ein dazu paralleles hinteres Hochregal umfasst, wobei die Steuereinheit dazu eingerichtet ist, die jeweils erforderlichen Großladungsträger für Sequenzierungsaufträge aus den Lagerebenen an zumindest einen ersten und einen zweiten vorderen Sequenzierungsbereich in der Sequenzierungsebene, die dem vorderen Hochregal zugeordnet sind, zuzustellen, und die jeweils erforderlichen Großladungsträger für Sequenzierungsauftrage aus den Lagerebenen an zumindest einen ersten und einen zweiten hinteren Sequenzierungsbereich in der Sequenzierungsebene, die dem hinteren Hochregal zugeordnet sind, zuzustellen. Das Regelsystem umfasst daher auf beiden Seiten, vorne und hinten, auch jeweils zwei oder zumindest zwei Sequenzierungsbereiche, nämlich bevorzugt jeweils einen linken und einen rechten Sequenzierungsbereich. Der Lift oder die Lifte können jeweils - entlang der Längsrichtung der Regale - zwischen den beiden Sequenzierungsbereichen jeder Seite, also vorne und hinten am Doppelregal, angeordnet sein.

Die Steuereinheit ist dann bevorzugt so eingerichtet, dass für jedes der beiden Regale des Doppelregals alternierend die beiden Sequenzierungsbereiche vom Sequenzierer abgearbeitet und über Lift und Querverschiebewagen nachbefüllt werden. Während Waren aus den erforderlichen Großladungsträgern für einen Sequenzierungsauftrag in einem Sequenzierungsbereich in der Sequenzierungsebene in ein Sequenzierungsgestell eingeordnet werden, werden somit die erforderlichen Großladungsträger für einen anderen Sequenzierungsauftrag an den anderen Sequenzierungsbereich in der Sequenzierungsebene zugestellt.

Bevorzugt sind die Querverschiebewagen zwischen dem vorderen und dem hinteren Hochregal des Hochregallagers angeordnet. Die Lifte können seitlich neben einer mittigen Gasse für die Querverschiebewagen angeordnet sein. Die Lifte können somit neben den Stellplätzen für Großladungsträger angeordnet sein.

Bevorzugt umfasst das Regalsystem zumindest zwei Lifte, besonders bevorzugt genau zwei Lifte. Dabei ist bevorzugt ein Lift zur vertikalen Beförderung der Großladungsträger des vorderen Hochregals eingerichtet und ein Lift zur vertikalen Beförderung der Großladungsträger des hinteren Hochregals eingerichtet.

Erfindungsgemäß umfasst das Regalsystem vier Lifte oder vier Übergabeplätze, wobei zwei Lifte oder Übergabeplätze zumindest mittelbar nebeneinander angeordnet sind und zur vertikalen Beförderung der Großladungsträger des vorderen Hochregals eingerichtet sind und zwei Lifte oder Übergabeplätze zumindest mittelbar nebeneinander angeordnet sind und zur vertikalen Beförderung der Großladungsträger des hinteren Hochregals eingerichtet sind. Die vertikale Beförderung kann für Übergabeplätze durch einen jeweils dazwischen angeordneten Lift erfolgen. Es kann somit insbesondere vier Übergabeplätze und zwei Lifte in dem Regalsystem geben, wobei vorzugsweise jeweils ein Lift zwischen zwei Übergabeplätzen angeordnet ist.

An den "Übergabeplätzen" erfolgt bevorzugt kein Transport von Großladungsträger nach außerhalb des Lagers, sondern mittels dieser Plätze werden Großladungsträger nur innerhalb des Lagers bewegt - insbesondere zum/vom Lift oder zum/vom Querverschiebewagen.

Die Lifte oder Übergabeplätze und die Steuereinheit sind bevorzugt so eingerichtet, dass die Großladungsträger jeweils von einem der zwei Lifte oder Übergabeplätze, die nebeneinander angeordnet sind, zum anderen der zwei Lifte oder Übergabeplätze, die nebeneinander angeordnet sind, bewegt werden können, also den jeweiligen Platz wechseln können, wobei der Platzwechsel für Übergabeplätze mittelbar über einen Lift und/oder nach einem Wechsel der Ebene erfolgen kann.

Erfindungsgemäß sind in jeder Lagerebene die vorderen Lifte oder Übergabeplätze so eingerichtet, dass die Großladungsträger jeweils in einer ersten Richtung von einem der zwei Lifte oder Übergabeplätze, die nebeneinander angeordnet sind, zum anderen der zwei Lifte oder Übergabeplätze, die nebeneinander angeordnet sind, den Platz wechseln und die hinteren Lifte oder Übergabeplätze sind so eingerichtet, dass die Großladungsträger oder Übergabeplätze jeweils in der zweiten Richtung, die der ersten Richtung entgegen gesetzt ist, den Platz wechseln, so dass die jeweils vorderen Lifte oder Übergabeplätze zum Transport in der anderen Richtung eingerichtet sind, als die jeweils hinteren Lifte oder Übergabeplätze. Dadurch können alle Großladungsträger zu und von beiden Sequenzierungsbereiche (links und rechts) befördert werden, ohne sich gegenseitig zu behindern.

Das Regalsystem umfasst bevorzugt zwei Lifte, wobei ein Lift zur vertikalen Beförderung der Großladungsträger des vorderen Hochregals eingerichtet ist und ein Lift zur vertikalen Beförderung der Großladungsträger des hinteren Hochregals eingerichtet ist.

Besonders bevorzugt umfasst das Regalsystem zwei Lifte und vier Übergabeplätze, wobei jeder der beiden Lifte zwischen jeweils zwei Übergabeplätzen angeordnet ist. In dieser Ausführungsform hat ein Hochregallagersystem zwei Lifte, nämlich einen Lift für das vordere Hochregal und ein weiterer Lift für das hintere Hochregal und vier Übergabeplätze. Damit lässt sich ein Einbahnsystem wie zuvor beschrieben realisieren. Die Beförderung der Großladungsträger kann von einem Querverschiebewagen zum Übergabeplatz und von dort in den Lift - und, beispielsweise in einer anderen Ebene, vom Lift zu einem anderen Übergabeplatz erfolgen.

### Kurzbeschreibung der Zeichnungen

Die Erfindung wird im Folgenden beispielhaft unter Bezugnahme auf die Zeichnungen beschrieben.
- Fig. 1: zeigt dreidimensional eine Gesamtübersicht der enthaltenen Komponenten und Bereichen einer möglichen Ausführung eines erfindungsgemäßen Regalsystems (auch als automatisches Greiflager "AGL" bezeichnet).
- Fig. 2: zeigt schematisch eine Übersicht der Komponenten und Bereiche in einem erfindungsgemäßen Regalsystem.
- Fig. 3: zeigt schematisch einen Ablauf der Sequenzierungsaufträge hintereinander.
- Fig. 4: zeigt schematisch mehrere AGL's können im Verbund angewendet werden.
- Fig. 5: zeigt schematisch eine Gesamtansicht des Simulationsmodell.
- Fig. 6: zeigt schematisch ein Unternetzwerk E0L und E0R.
- Fig. 7: zeigt schematisch ein Unternetzwerk E1 - E5.
- Fig. 8: zeigt schematisch eine Auftragserstellung und Zuweisung.
- Fig. 9: zeigt schematisch Transportstrecken zwischen den Ebenen.
- Fig. 10: zeigt schematisch Transortstrecken zwischen E0L und E0R.
- Fig. 11: zeigt schematisch ein Bereitstellen der GLTs.
- Fig. 12: zeigt schematisch einen Rücktransport der GLTs.

### Detaillierte Beschreibung der Erfindung

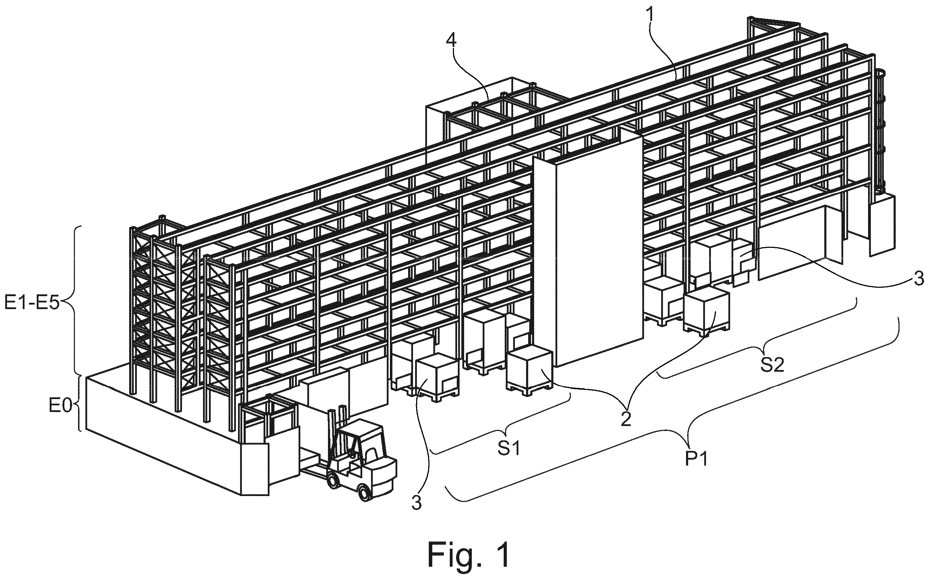

In Fig. 1 ist ein erfindungsgemäßes Regalsystem dargestellt.

Lifte 4 werden auch "Heber" genannt.

Querverschiebewagen 5 werden auch "Shuttles" genannt, und mit "QVW" abgekürzt.

Die Sequenzierbereiche für einen Sequenzierer, also einen Arbeiter - nämlich bevorzugt erster Sequenzierbereich S1 und zweiter Sequenzierbereich S2 - werden zusammen auch ein "Pickplatz" oder auch eine "SEQ-Bucht" genannt bzw. auch Pickstation.

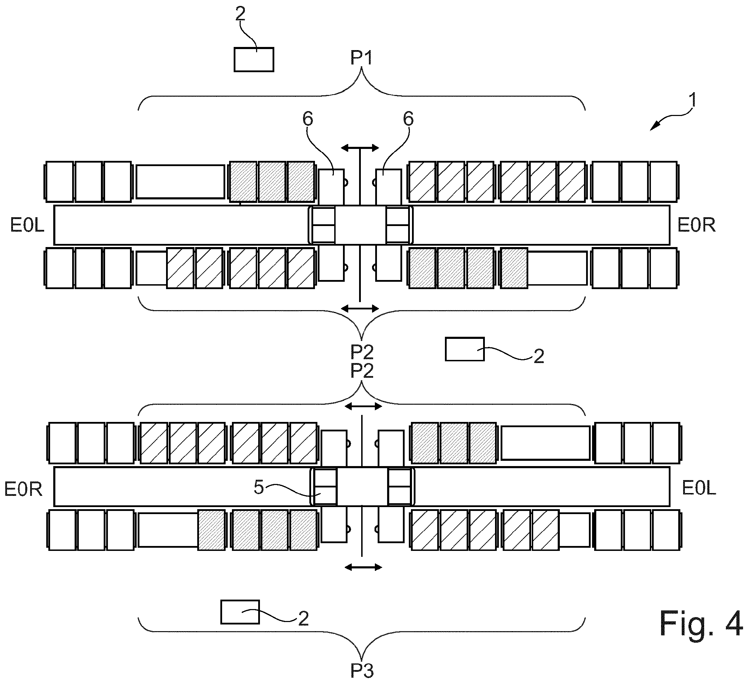

Kernstück eines erfindungsgemäßen Regalsystems ist ein Hochregallager 1, mit automatisierten Horizontal- und Vertikaltransportkomponenten, nämlich Lift 4 und Querverschiebewagen 5, um das benötigte Material, nämlich die benötigten Großladungsträger 3, des nächsten Sequenzierungsauftrags in den Sequenzierbereich S1, S2 zu transportieren. In der untersten Ebene E0 befinden sich links und rechts des Lifts 4 mindestens zwei Sequenzierungsbereiche S1, S2. Mehrere Bereiche können abwechselnd von einem oder mehreren Sequenzierern bearbeitet werden. Mehrere Bereiche können auch für kurze Zeit zu einem gemeinsamen Bereich zusammengefasst werden. Dabei können die Bereiche auch von mehr als einem Hochregal kommen - siehe Fig. 4. Während mindestens ein Sequnzierer in einem Bereich, zum Beispiel S1, den eigentlichen Sequenzierauftrag sequenziert, wird in mindestem einem anderen Bereich, zum Beispiel S2, das Material des vorherigen Auftrages zurück in das Lager eingelagert und das Material für den nächsten Sequenzierauftrag vorbereitet. Dem Sequenzierer wird nur das Material bereitgestellt, das er für seine Sequenzieraufgabe benötigt. Nach Beendigung seines Sequenzierauftrags kann der Sequenzierer in einen anderen inzwischen vorbereiteten Sequenzierbereich für den nächsten Auftrag wechseln. Was in diesem Text mit Sequenzierung in Verbindung gebracht wird, kann genauso auch für eine Kommissionierung verwendet werden.

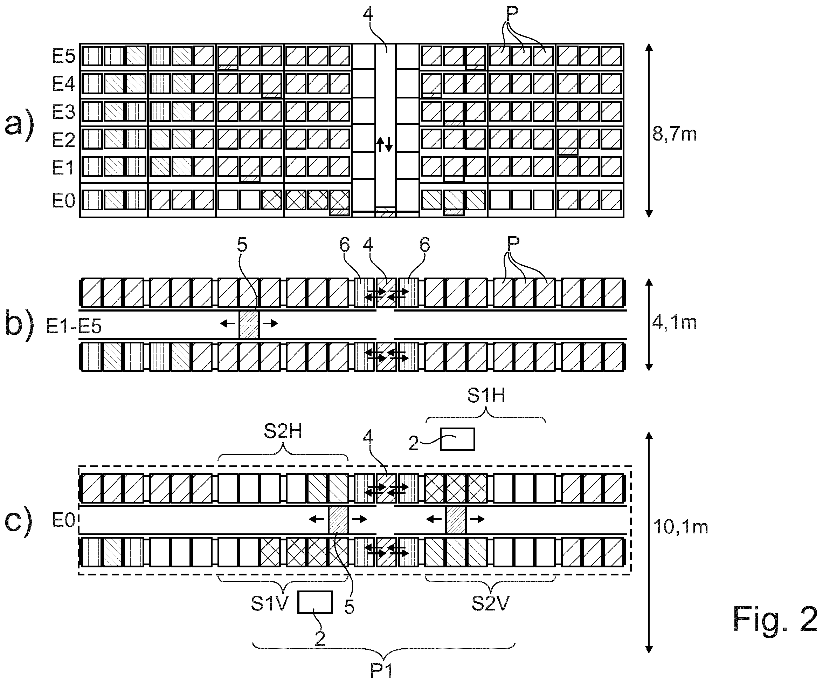

Fig. 2 zeigt schematisch eine Übersicht der Komponenten und Bereiche in einem erfindungsgemäßen Regalsystem, nämlich oben bei a) eine Seitenansicht, in der Mitte bei b) eine Draufsicht auf die Lagerebenen E1-E5, unten bei c) eine Draufsicht auf eine Ebene mit Sequenzierungsbereichen, nämlich hier die Bodenebene, E0.

Voll- und Leergutplätze für Großladungsträger 3 können durch eine Vorzone ersetzt werden. Es können beliebig viele Sequenzierungsbereiche S1, S2, auch von mehreren Hochregallagern 1 im Verbund verwendet werden. In Fig. 2 sind zwei vordere Sequenzierungsbereiche S1V und S2V, die zusammen eine erste Pickstation P1 bilden können, und zwei hintere Sequenzierungsbereiche S1H und S2H dargestellt.

"Vorzone" bedeutet Lagerplätze für GLTs 3, bspw. Ein- und Auslagerplätze am linken Regalrand, um das Regal mittels Stapler und wiederaufgefüllten GLTs 3 zu beliefern bzw. leere GLTs 3 dem Regal zu entnehmen.

In dem dargestellten AGL sind auch in der Ebene E0 Hauptlagerplätze für GLT dargestellt. Insofern bildet die Sequenzierungsebene E0 nicht allein eine Sequenzierungsebene, sondern zusätzlich eine Lagerebene. Die Ebene E0 ist somit eine Ebene, in der sich, vorzugsweise zusätzlich zu anderen Bereichen, auch Sequenzierungsbereiche befinden.

Die dargestellte Ausführung mit zwei Querverschiebewägen 5 ist die bevorzugte Variante für die Ebene E0 bzw. allgemein für Ebene(n) mit Sequenzierungsbereichen. Für Lagerebenen, wie E1-E5, ist die bevorzugte kostengünstigere Variante nur ein Querverschiebewagen 5 pro Ebene. Eine Variante mit zwei Querverschiebewägen 5 pro Lagerebene E1-E5 wäre jedoch auch vorteilhaft und ermöglicht eine raschere Abholung bzw. Zustellung der Waren.

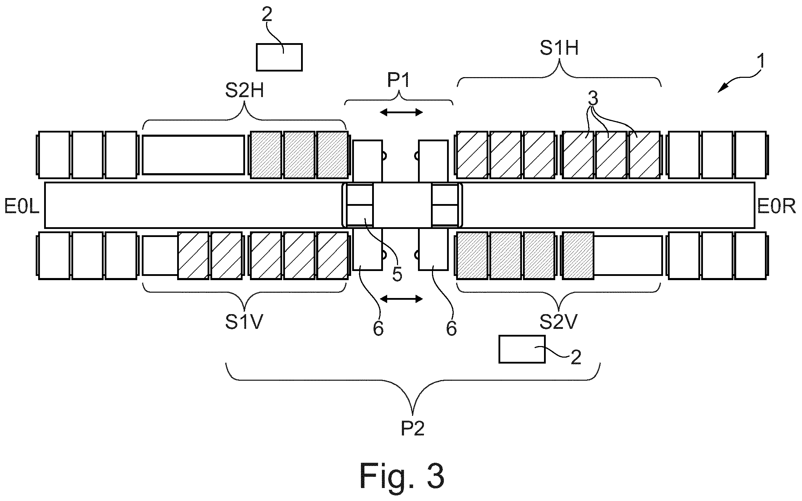

Fig. 3 zeigt schematisch einen Ablauf von Sequenzierungsaufträgen die nacheinander bearbeitet werden.
1. Ein jeweiliger Mitarbeiter arbeiten auf beiden Pickstationen den aktiven Sequenzierungsauftrag ab - zum Beispiel vorne, rechts, in S2V und hinten, links, in S1H - also an beiden Seiten des Regals diagonal versetzt zueinander.
2. In der Zwischenzeit kann auf der anderen Seite der jeweiligen Pickstation der alte Sequenzierungsauftrag wieder in das automatische Lagersystem eingelagert werden und alle Teilevarianten für den nächsten Sequenzierungsauftrag aus dem automatischen Lagersystem bereitgestellt werden.
3. Falls es notwendig ist, kann auch ein Austausch einer Ladeeinheit im aktiven Sequenzierungsauftrag stattfinden.
4. Nach Abschluss des aktiven Sequenzierungsauftrages kann der Mitarbeiter die Seite innerhalb der Pickstation wechseln, also zum Beispiel in P1 von S2V auf S1V, und beginnen den nächsten Auftrag zu sequenzieren.

Fig. 4 zeigt schematisch dass mehrere AGL's, also automatische Greiflager, also Regalsysteme, im Verbund angewendet werden können.

So kann hier der Arbeitsplatz Pickstation 2 die Sequenzierungsbereiche von zwei verschiedenen Hochregalen umfassen, bevorzugt somit einen ersten und einen zweiten Sequenzierungsbereich S1, S2 von jedem der beiden Hochregallager.

Das System ist sehr flexibel und leicht zu adaptieren. Je nach gefordertem Durchsatz, Lagerkapazität und verfügbarer Hallengröße kann das System angepasst werden. Die Lagerebenen E1 - E5 werden mit mindestens einem Lift 4 verbunden. Es muss keine anlagenspezifische Lagertechnik eingesetzt werden, sondern es kann ein herkömmliches Palettenregal verwendet werden. Eine Anpassung oder Anbindung der Anlagentechnik an das Regalsystem ist nicht erforderlich. Die Länge und Höhe der Regalreihen ist frei skalierbar. Je nach gefordertem Durchsatz müssen auch dementsprechend viele mechanische Komponenten (Lifte 4 und Querverschiebewägen 5) eingesetzt werden. Je nach Art der Ware (KLT/GLT) die bewegt werden soll, muss auch das Lastaufnahmemittel gewählt werden. Diese können als Teleskopgabeln, Kettenförderer, Rollenförderer und Bandförderer oder ähnlichem ausgeführt werden. Auch eine Verwendung von Systempaletten ist möglich. Die Querverschiebewägen 5 könnten je nach Ausführung auch die Ebenen gemeinsam mit den Ladungsträgern 3 wechseln, beispielsweise als eine Art fahrbares Untergestell für Großladungsträger. In einer bevorzugten Variante sind jedoch die Querverschiebewägen fix den Ebenen zugeordnet und werden nur die Großladungsträger vom Querverschiebewagen zu den Übergabeplätzen befördert/verschoben und wechseln nur die Großladungsträger die Ebenen.

Das Sequenzieren von Kleinladungsträgern und einzelnen Teilen aus den bereitgestellten Ladeeinheiten in Sequenzierungsbehältern, also Sequenzierungsgestellen 2, kann manuell oder automatisch z.B. mit einem Roboterarm durchgeführt werden. Dieser Sequenzierungsbehälter 2 kann manuell (z.B. Hubgabel, Rollgestell), halbautomatisch (z.B. Stapler) oder vollautomatisch (z.B. FTS) an die Montagelinie transportiert werden. Ein Sequenzierungsbehälter bzw. -gestell 2 kann Teilevarianten einer oder mehreren Teilefamilien für ein oder mehrere Herstellungsstücke enthalten.

Das System besitzt keine Vorzone für eine Bereitstellung der Ladeeinheiten. Dafür kann die unterste Lagerebene E0 benutzt werden. Das System ist primär für eine Kommissionierung von Kleinladungsträgern aber auch zur Sequenzierung von Teilen konzeptioniert. Es können auch mehrere Anlagen dieser Art gemeinsam im Verbund nebeneinander angereiht und weiters mittels Fördertechnik verbunden werden, um die Bereitstellungsbereich zu optimieren und flexibel zu halten. Weiters kann diesem System mindestens ein automatisches Hochregallager, welches als Hauptlager dient, in Reihe oder Serie vorgeschalten werden.

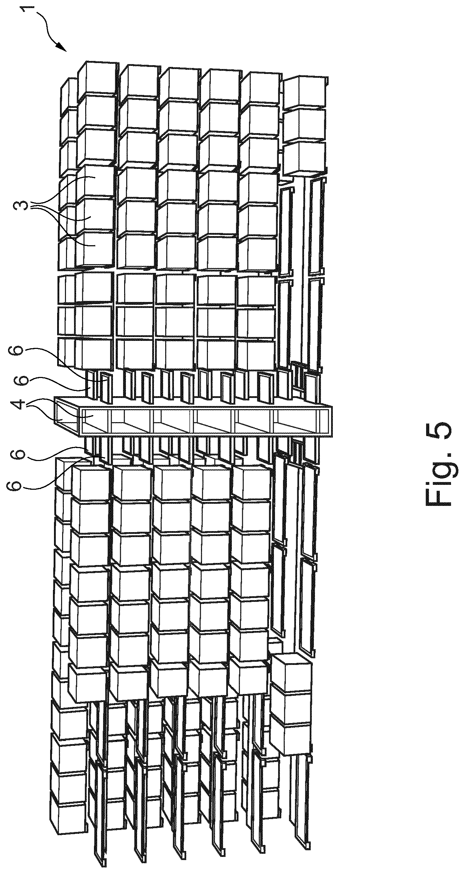

Fig. 5 zeigt schematisch eine Gesamtansicht eines Simulationsmodells eines erfindungsgemäßen Regals.

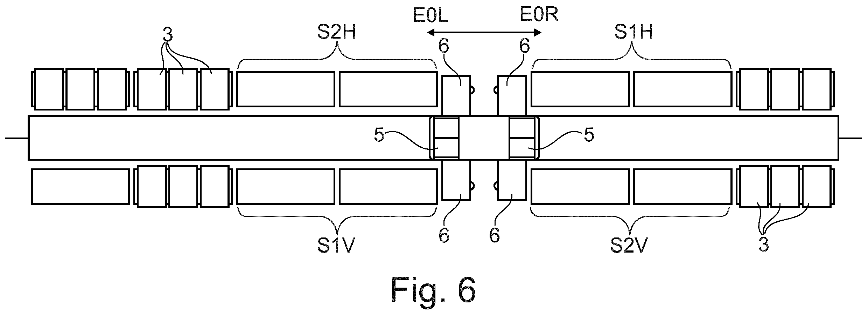

Fig. 6 zeigt schematisch ein Unternetzwerk E0L und E0R, also die Ebene0-Links E0L und Ebene0-Rechts E0R, also die Bodenebene, eines Regalsystems.

Die beiden Unternetzwerke "Ebene0-Links" (E0L) und "Ebene0-Rechts" (E0R), dargestellt in Fig. 6 als Unternetzwerk E0L und E0R, sind sich sehr ähnlich. Beide besitzen mindestens einen Querverschiebewagen 5 und mindestens zwei Übergabeplätze. An beiden Seiten des Querverschiebewagens 5 können die Regalreihen angestellt werden. In der Mitte zwischen den Regalreihen befindet sich die QVW-Spur für mindestens einen Querverschiebewagen 5. Mindestens ein QVW kann für E0L und E0R gemeinsam verwendet werden, oder, zur Erhöhung des GLT Durchsatzes, wie auch in Fig. 2 dargestellt, kann ein QVW für E0L und ein weiterer QVW für E0R verwendet werden - also vorzugsweise zwei QVWs für die Sequenzierungsebene EO.

Die Stellplätze, welche den Übergabeplätzen 6 am nächsten sind, werden als Sequenzierungsplätze verwendet. Beide Unternetzwerke fassen diese Sequenzierungsplätze zu je zwei Sequenzierungsbereichen S1, S2 zusammen. Der Unterschied zwischen den beiden Netzwerken ist, dass beispielsweise links vorne im E0L zusätzlich Stellplätze als Ein- und Auslagerungsplätze klassifiziert werden. Es können jedoch auch mehrere dieser Stellplätze an unterschiedlichen Positionen angeordnet werden. Diese werden optimalerweise mit einem Abstand von einem Hauptlagerplatz so nah wie möglich am Sequenzierungsbereich S1, S2 platziert. Der Abstand von einem Hauptlagerplatz ist zu bevorzugen, um die Arbeitsbereiche der Arbeiter und Stapler aus Sicherheitsgründen zu trennen. Diese Ein- Auslagerungsplätze können auch durch eine vollautomatische Vorzone ersetzt werden, wodurch die Ware z.B. durch einen Heber 4 in die entsprechende Ebene auf einen Übergabeplatz 6 gestellt wird und von dort von einem QVW 5 weiter eingelagert wird.

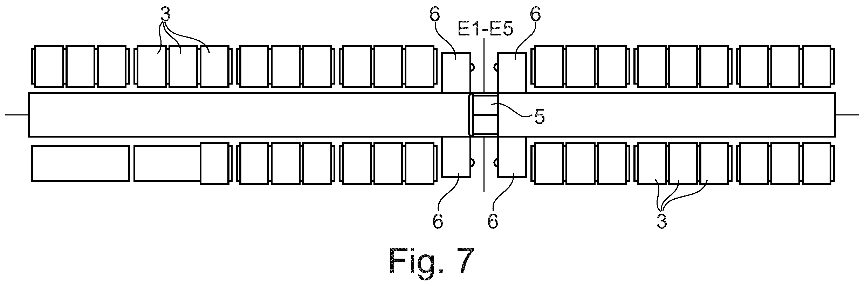

Fig. 7 zeigt schematisch ein Unternetzwerk E1 - E5, also der Ebene 1 - 5.

Das Unternetzwerk "Ebene1 - 5" E1 - E5 besteht jeweils aus mindestens einem Querverschiebewagen 5, beispielsweise vier Übergabeplätzen 6 und seitlich angeordneten Regalreihe(n). In der Mitte befindet sich die QVW-Spur für den mindestens einen Querverschiebewagen 5. Die Stellplätze links vorne werden idealerweise für die Ein- und Auslagerplätze reserviert. Sie müssen mindestens den gleichen Abstand zum Lift 4 haben wie die Auslagerungsplätze in E0L. Auch hier kann die oben beschriebene Vorzone die Ein-Auslagerungsplätze ersetzen.

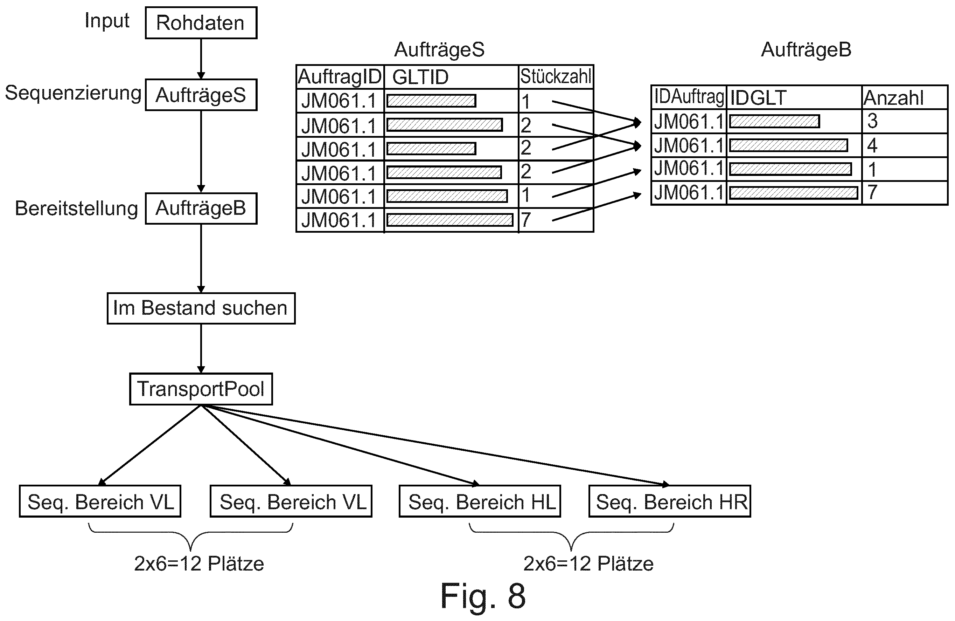

In folgenden und in Fig. 8 werden Prozesse und deren Strategien im Hochregallager beschrieben. Die folgenden Prozesse werden üblicherweise für jeden Auftrag in der gleichen Reihenfolge abgehandelt. Da die Anlage jedoch vier Sequenzierungsbereiche S1V, S1H, S2V, S2H besitzen kann und damit vier Aufträge parallel bearbeitet werden, können alle Prozesse zeitgleich, je nach Fortschritt des jeweiligen Auftrages, durchgeführt werden.

Zusätzliche Detailerklärung bezüglich Softwareprogram:
Die Ausgangslage für den ersten Prozess "Aufträge erstellen und zuweisen" sind die Inputdaten von vergangenen Arbeitstagen oder aktuelle Daten, die von dem Unternehmen bereitgestellt werden.

Aufträge erstellen und zuweisen:
Der erste Schritt ist, aus den Sequenzdaten Sequenzierungsaufträge zu erstellen. Jeder Auftrag bedeutet in weiterer Folge ein volles Sequenzierungsgestell 2. Der Prozess wird mit der Fig. 8 Auftragserstellung und Zuweisung bildlich dargestellt. Bei dieser Auftragserstellung bekommt jeder Auftrag seinen eigenen Namen, der kann aus dem Namen des jeweiligen Sequenzierumfangs und einer fortlaufenden Laufnummer bestehen. Unter jedem Auftragsnamen ist die Sequenz der Teile, die Menge der Teile und die gesamte Variantenanzahl vermerkt. Die Variantenanzahl gibt an, wie viele Stellplätze im Sequenzierungsbereich erforderlich sind, um den Auftrag durchführen zu können. Die Variantenzahl bezieht sich auf die in der Produktionsstraße vorhandenen Fahrzeugvarianten, für die das Sequenzierungsgestell, beispielsweise mit verschiedenen Varianten von Lenkrädern, befüllt wird - für jede dieser Varianten von Lenkrädern ist ein eigener Großladungsträger im Sequenzierungsbereich bereitzustellen.

Die Tabelle "AufträgeS" in der Darstellung wird für die spätere Sequenzierung benötigt und gibt die Sequenz und Menge der Teilentnahme vor. Die Tabelle "AufträgeB" in der Darstellung wird für die folgende Bereitstellung der Großladungsträger 3 (GLTs) benötigt und gibt an, welche GLTs und wie viele Teile daraus insgesamt für den Auftrag benötigt werden.

Für die Sequenzierung eines Auftrages müssen die benötigten Varianten für einen Auftrag nun in einem Sequenzierungsbereich bereitgestellt werden. Dafür werden für einen Auftrag die benötigten Varianten im Lagerbestand des automatischen Greif Lagers (AGL's), also des Regalsystems, gesucht und für diesen Auftrag reserviert. Bei der Reservierung sollte gleichzeitig darauf geachtet werden, dass die Füllmenge des GLT's für diesen einen Auftrag ausreichend ist. Sollte das nicht der Fall sein, sollte zusätzlich der nächstältere GLT der gleichen Variante auch noch bereitgestellt werden. Diesen Sonderfall nennt man Doppelbereitstellung und erhöht die Variantenanzahl für diesen Auftrag um eins, da ein zusätzlicher Stellplatz benötigt wird. Wenn alle GLTs für einen Auftrag reserviert sind, könnte dieser Auftrag einem Transportpool hinzugefügt werden. Darin sind unter dem Auftragsnamen alle notwendigen Informationen für das System zwischengespeichert, um später die reservierten GLTs wiederzufinden. Der mögliche Parameter "Transportpoolanzahl" kann beliebig gewählt werden und gibt an, wie viele solcher Aufträge sich im Transportpool befinden sollen.

Beispielsweise die Transportpoolanzahl beträgt sechs. Somit befinden sich sechs Aufträge mit deren reservierten GLTs im Transportpool und warten darauf, dass sie einem freien Sequenzierungsbereich zugewiesen werden. Bei einer Zuweisung könnte der Transportpool seine Informationen über diesen Auftrag dem System übergeben und löschen, um Platz für einen neuen Auftrag zu machen.

Im Normalfall wird immer der älteste Auftrag im Transportpool einem freien Sequenzierungsbereich zugewiesen. Ist jedoch die Variantenanzahl größer als die Anzahl der freien Plätze im Sequenzierungsbereich, kann dieser Auftrag übersprungen werden. Danach wird immer die Variantenanzahl des nächstältesten Auftrages im Transportpool kontrolliert. Der erste Auftrag mit ausreichend kleiner Variantenanzahl könnte zugewiesen werden. Bei der nächsten Auftragszuweisung beginnt die Kontrolle der Variantenanzahl wieder beim ältesten Auftrag. Die Aufgabe des Transportpools wäre es, dafür zu sorgen, dass jederzeit ein passender Auftrag für eine Zuweisung vorhanden ist, um Freistände von Sequenzierungsbereichen zu verhindern.

Für die optimale Auslastung des Arbeiters soll jeweils ein Sequenzierungsbereich bereitgestellt werden, während der benachbarte Sequenzierungsbereich von einem Arbeiter sequenziert wird und umgekehrt. Ein freier Sequenzierungsbereich mit z.B. sechs Stellplätzen hätte sechs Freiplätze. Es ist jedoch möglich, dass es viele Aufträge mit einer Variantenanzahl größer als sechs gibt. Daher ist es vorgesehen, dass ein Auftrag für einen Sequenzierungsbereich auf den benachbarten Sequenzierungsbereich ausgeweitet werden darf. Somit stehen für einen Auftrag nicht nur sechs Plätze, sondern zwölf Plätze je Seite zur Verfügung. Um den erwähnten Wechselbetrieb der benachbarten Sequenzierungsbereiche aufrecht zu erhalten, sollte dafür gesorgt werden, dass auf den zwölf Plätzen stets zwei Aufträge Platz haben. Dies wäre mit einer richtig gewählten Variantengrenze jederzeit möglich. Die Variantengrenze und die drei Möglichkeiten, einen Auftrag zu behandeln, werden in den folgenden Unterpunkten erklärt.

Fig. 8 zeigt schematisch eine Auftragserstellung und Zuweisung.

Übersteigt die Variantenanzahl eines Auftrages die Variantengrenze, dann könnten die Varianten, die darüber liegen, immer noch für diesen Auftrag reserviert werden, aber, anstatt mit den anderen GLTs im Transportpool aufgelistet zu werden, könnten sie unter dem zutreffenden Auftragsnamen in einer Überhangliste zwischengespeichert werden. Wie diese Art der Aufträge weiter behandelt werden könnten, ist im folgenden Punkt anhand der dritten Möglichkeit näher dargestellt.

Die Variantengrenze hätte den Effekt, dass Aufträge mit beliebig hoher Variantenanzahl bearbeitet werden könnten und trotzdem immer genügend Platz für einen zweiten Auftrag auf den insgesamt z.B. zwölf möglichen Sequenzierungsplätzen wäre.

Die drei Möglichkeiten, wie Sequenzierungsaufträge, abhängig von ihrer Variantenanzahl, behandelt werden könnten, werden nun kurz erläutert. Es wird dabei davon ausgegangen, dass bereits z.B. ein Auftrag mit einer Variantenanzahl von drei auf dem linken Sequenzierungsbereich sequenziert wird und der rechte Sequenzierungsbereich gerade frei geworden ist und auf eine Auftragszuweisung wartet. Zuerst müssten die freien Sequenzierungsplätze und somit die maximal zulässige Variantenanzahl, die der neue Auftrag haben darf, ermittelt werden. In diesem Beispiel handelt es sich um Sequenzierungsbereiche mit je sechs Sequenzierungsplätzen. Zieht man, für dieses Beispiel von insgesamt zwölf möglichen, drei belegte Plätze ab, kommt man auf neun Freiplätze. Sollte die Variantenanzahl größer als die Anzahl der vorhandenen Freiplätze sein, könnte der Auftrag im Transportpool, wie oben bereits erwähnt, übersprungen werden und käme erst wieder bei der nächsten Auftragszuweisung in Frage.

### 1. Möglichkeit - Variantenanzahl unter sechs

Alle GLTs können auf dem rechten Sequenzierungsbereich bereitgestellt werden.

### 2. Möglichkeit - Variantenanzahl über sechs aber unter der Variantengrenze

Die ersten sechs GLTs könnten auf dem rechten Sequenzierungsbereich bereitgestellt werden. Der Rest kann auf einem benachbarten Sequenzierungsbereich bereitgestellt werden.

### 3. Möglichkeit - Variantenanzahl über der Variantengrenze

Ausgehend von einem Beispiel, dass ein Auftrag eine Variantenanzahl von zehn besitzt und eine Variantengrenze von acht besteht, könnten die ersten sechs GLTs auf dem rechten Sequenzierungsbereich bereitgestellt werden. Weitere zwei GLTs können auf dem benachbarten linken Sequenzierungsbereich bereitgestellt werden. Die restlichen zwei GLTs könnten in der Überhangliste vermerkt werden und können warten. Sobald ein bereits bereitgestellter GLT nicht mehr gebraucht wird, kann dieser aus dem Sequenzierungsbereich entfernt werden und der neunte GLT aus der Überhangliste kann bereitgestellt werden. Diese Vorgehensweise wiederholt sich, bis alle GLTs von diesem Auftrag aus der Überhangliste bereitgestellt gewesen wären.

Bevor näher auf die einzelnen Transportstrecken eingegangen wird, sollten die übergeordneten Transportstrategien kurz beschrieben werden. Da viele Transporte gleichzeitig und in alle Richtungen durchgeführt werden, sind einfache und grundlegende Verkehrsregeln sinnvoll, um möglichen Staus oder sogar Blockierungen entgegenzuwirken und die Transporte möglichst effizient durchzuführen.

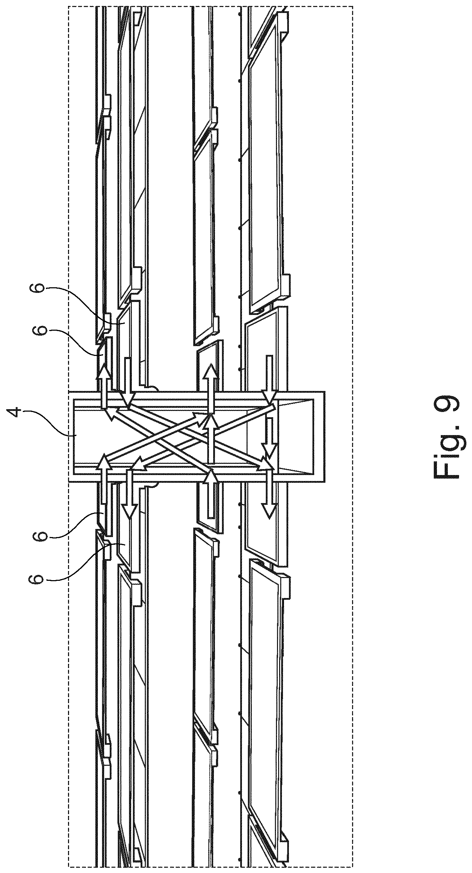

Fig. 9 zeigt schematisch die Transportstrecken zwischen den Ebenen.

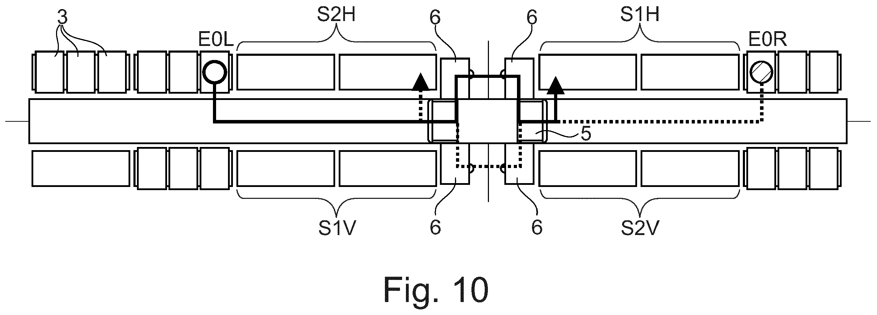

Fig. 10 zeigt schematisch die Transportstrecken zwischen E0L und E0R.

Die wichtigste Maßnahme ist die Einführung eines Einbahnsystems. In jeder Ebene sind mindestens zwei Übergabeplätze, wobei mindestens einer für die Aufnahme und mindestens einer für die Abgabe von GLTs bestimmt ist. Die in Fig. 10 angeführte Skizze dient als Beispiel. Um GLTs zum Sequenzierungsbereich nach E0R zu transportieren, könnten sie am "Übergabeplatz-Hinten-Links" abgegeben werden (Linie). Für den Transport nach E0L könnte der GLT am "Übergabeplatz-Vorne-Rechts" abgegeben werden (andere Linie). Gleichermaßen könnte der Rücktransport von E0R am "Übergabeplatz-Vorne-Links" und der Rücktransport von E0L am "Übergabeplatz-Hinten-Rechts" ankommen. Bei einem Transport von E0R nach E0L oder umgekehrt könnte, wie in der Fig. 10 Transportstrecken zwischen E0L und E0R ersichtlich, die Liftplattform mit Hilfe der "Übergabeplätze-Rechts" und "Übergabeplätze-Links" eine Verbindung bilden. Das Einbahnsystem hilft, um zu verhindern, dass sich zwei GLTs gegenüberstehen und sich in die jeweils entgegengesetzte Richtung bewegen wollen.

Mit diesem Einbahnsystem kann viel Verwaltungsarbeit für die einzelnen Transporte eingespart werden, da keine Transportstrecke für die eine oder andere Richtung gesperrt werden müsste. Das ermöglicht auch kleine Warteschlangen in die jeweilige Richtung, was einen optimalen Effekt auf die Auslastung aller Geräte haben könnte. Jeder Querverschiebewagen kann, ohne Gefahr eines entgegenkommenden GLTs, seine Ladung an einem Übergabeplatz abgeben. Kommt es, zum Beispiel, zu vielen Transporten nach E0L, dann könnte der erste GLT noch von dem Querverschiebewagen in E0L bedient werden. Die folgenden könnte jedoch auf dem "Übergabeplatz-Vorne-Links" in Ebene0, auf dem Lift in Höhe der Ebene0 und auf den "Übergabeplätzen-Vorne-Rechts" in Ebene 1 - 5 warten, bis ihre Vorgängergeräte frei werden. Wie in der Fig. 9 Transportstrecken zwischen den Ebenen ersichtlich, könnten die Transportstrecken an der hinteren Seite der Anlage genau seitenverkehrt verlaufen. Das erzeugt einen Kreisverkehr im Uhrzeigersinn und könnte das Prinzip des Einbahnsystems für Transporte zwischen E0L und E0R aufrechterhalten.

Jeder Lift könnte eine eigene Warteliste besitzen, in der sich die GLTs für einen Transport eintragen können. Jeder Querverschiebewagen könnte eine Einlagerwarteliste und eine Auslagerwarteliste besitzen. Die GLTs in der Einlagerwarteliste wollen von einem Übergabeplatz auf einen Lagerplatz und die GLTs in der Auslagerwarteliste wollen von einem Lagerplatz auf einen anderen Lagerplatz oder auf einen Übergabeplatz. Bei diesen drei Arten von Listen könnte bei einer Entnahme immer der älteste Transport gewählt werden, wobei es wenige Ausnahmen geben könnte. Die Querverschiebewagen könnten zuerst die Einlagerwarteliste abarbeiten und sich dann erst um die Auslagerungen kümmern. Das könnte Blockierungen des Liftes und somit starke Staus in Ebene0 verhindern. Weiters könnte der Lift den Transport eines GLT's vorziehen, wenn der Lift sich bereits in der Ebene des GLT's befindet. Das könnte Leerfahrten reduzieren und wäre besonders in der Ebene0 hilfreich, um in dieser Ebene Staus zu minimieren.

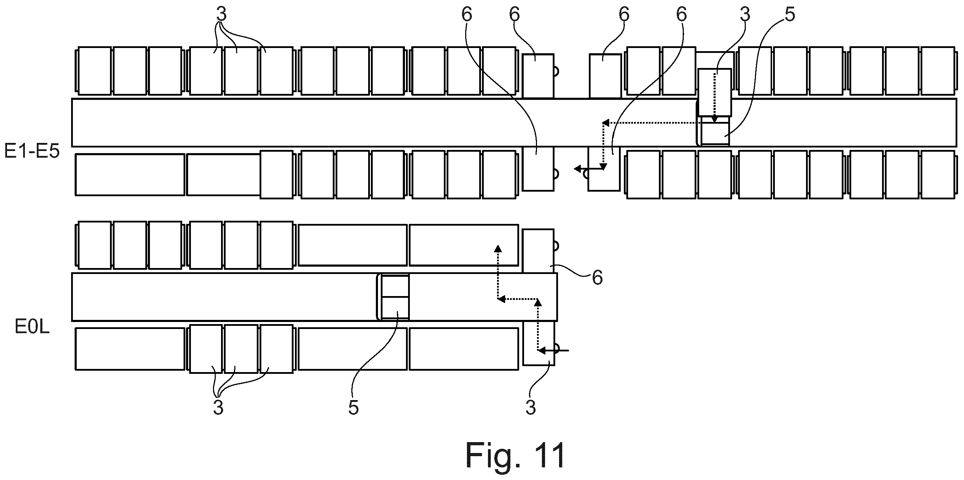

Fig. 11 zeigt schematisch ein Bereitstellen der GLTs, wobei der Weg des GLTs als Pfeil eingezeichnet ist.

Nachdem ein Auftrag einem Sequenzierungsbereich zugewiesen wurde, könnte die Bereitstellung der GLTs mit den dafür im Vorhinein reservierten GLTs im Hochregallager beginnen. Die GLTs könnten ihren Zielsequenzierungsbereich erhalten und machen sich mit dieser Information auf den Weg. Sie könnten sich in die Auslagerwarteliste des Querverschiebewagens 5 in ihrer Ebene eintragen und können warten, bis er an ihrer Position ist. Der Querverschiebewagen 5 nimmt den GLT auf und bringt ihn zu einem Übergabeplatz, der zum Zielsequenzierungsbereich führt. Nachdem der GLT auf dem Übergabeplatz übergeben wurde, könnte der Querverschiebewagen den nächsten Transport aus seinen Wartelisten entnehmen und sich auf den Weg machen. In der Zwischenzeit könnte sich der GLT in die Warteliste des angrenzenden Liftes eintragen. Der GLT könnte vom Lift aufgenommen und in Richtung Ebene0 transportiert werden. Der Lift gibt den GLT an einen der Übergabeplätze in Ebene0 ab und könnte zu seiner nächsten Position in seiner Warteliste fahren. Der GLT könnte sich in die Einlagerwarteliste für den Querverschiebewagen in Ebene0 eintragen und wartet bis er an der Reihe ist. Sobald der Querverschiebewagen am Übergabeplatz ist, nimmt er den GLT auf und transportiert ihn z. B. zum nächstgelegenen freien Platz des Zielsequenzierungsbereiches E0L.

Sobald mindestens ein GLT eines Auftrages bereitgestellt ist, könnte begonnen werden, aus den bereitgestellten GLTs die Teile zu entnehmen und in das Sequenzierungsgestell zu legen.

Bei den Aufträgen, deren Variantenanzahl die Variantengrenze übersteigt, können die GLTs, wie oben zu "Drei Möglichkeiten der Auftragsbehandlung" beschrieben, während der Sequenzierung ausgetauscht werden. Am Ende einer Sequenzierung kann der Arbeiter von der linken auf die rechte Seite gehen oder umgekehrt, um den nächsten Auftrag zu sequenzieren.

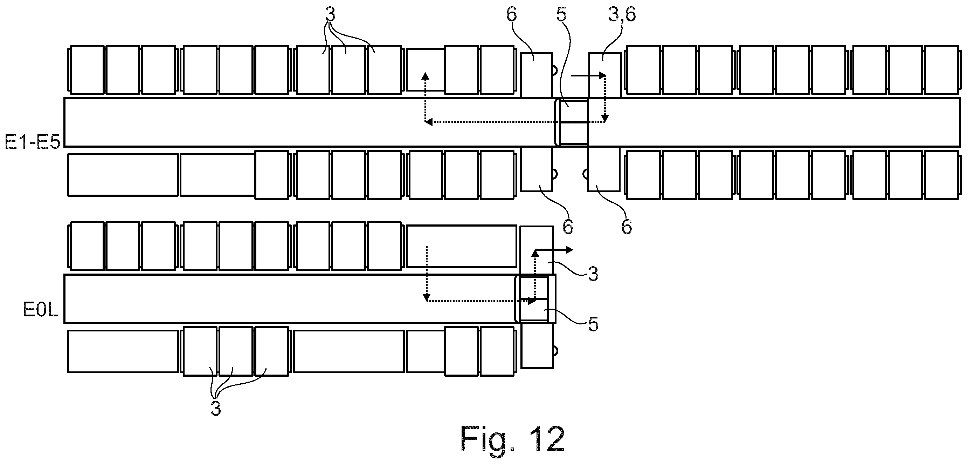

Fig. 12 zeigt schematisch einen Rücktransport der GLTs.

Der Rücktransport für einen GLT kann freigegeben werden, sobald kein weiteres Teil mehr aus diesem GLT gebraucht wird bzw. er leer ist. Diese freigegebenen GLTs könnten aus den Sequenzierungsbereichen entfernt werden, obwohl der Arbeiter den Sequenzierungsvorgang für den Auftrag noch nicht abgeschlossen hat. Es könnte für ihn ein freier Hauptlagerplatz gesucht und dorthin rücktransportiert werden oder als Leergut ausgelagert werden.

Für alle gerade erwähnten Fälle könnte der Ablauf des Rücktransportes gleich sein. Der GLT könnte sich wieder in die Auslagerwarteliste des Querverschiebewagens in Ebene0 eintragen und auf ihn warten. Dieser könnte ihn je nach vorliegendem Fall zu einem Auslager-, Hauptlager-oder zu einem Übergabeplatz in Ebene0 bringen. Falls er auf einem Übergabeplatz ankommt, könnte sich der GLT in die Warteliste für den Lift eintragen, welcher ihn in jene Ebene transportieren könnte, in der z.B. sein zugewiesener Hauptlagerplatz oder auch Auslagerplatz liegt. Nach der Übergabe von dem Lift auf den Übergabeplatz könnte der GLT sich in die Einlagerwarteliste des Querverschiebewagens in dieser Ebene eintragen. Der GLT kann warten, bis er an der Reihe ist und könnte dann zu seinem Platz bzw. Hauptlagerplatz (in Fig. 12 beispielsweise dritter Platz links in einer der Ebenen E1 - E5) transportiert werden, wo er auf seinen nächsten Aufruf wartet.

Insgesamt sind somit die wichtigsten Verfahrensschritte, die von einem erfindungsgemäßen Regalsystem unterstützt werden können:
Ein Arbeiter/Sequenzierer entnimmt das gewünschte Material aus den sortenreinen Ladeinheiten/Kisten/Bauteilkisten/Pallettenboxen - hier im Text als Großladungsträger (=GLT) 3 bezeichnet, die in der Sequenzierungsebene, hier untersten Ebene E0 des Hochregals 1 des AGL je nach dem konkreten Sequenzierungsauftrag vom AGL dem Arbeiter bereitgestellt werden (siehe zB. Fig. 2) und legt sie in ein Sequenzierungsgestell 2, welches dann an die Produktionsstraße gebracht wird, um die Teile entsprechend der Reihenfolge (Varianten) der an der Produktionsstraße (nicht dargestellt) angeordneten Fahrzeugkarosserien zu verbauen. Mit dem hier im Text verwendeten Begriff "Großladungsträger" ist keine Einschränkung der Größe der im Ladungsträger aufgenommenen und für die jeweilige Sequenzierung erforderlichen Bauteile/Materialien getroffen. Alle Bauteile, die für eine Fahrzeugproduktion für eine Sequenzierung in Frage kommen fallen darunter.

Hierbei wird der Arbeiter/ Sequenzierer vom AGL insofern unterstützt, als das AGL, wie in Fig. 2 dargestellt, in der untersten Ebene auf jeder Seite des AGL je zwei Sequenzierungsbereiche S1V, S2V, S1H, S2H aufweist - links vom Lift z.B. S2H und rechts vom Lift z.B. S1H auf der einen Seite. Zwei Sequenzierungsbereiche, wie S1H und S2H bilden eine Pickstation, z.B. hier P2. Gleiches auf der gegenüberliegenden Seite des AGL. Das AGL stellt dazu in jedem Sequenzierungsbereich S1V, S2V, S1H, S2H vorzugsweise je sechs Stellplätze P für GLTs bereit, die vom AGL entsprechend des jeweiligen zu sequenzierenden Auftrages mit den dazu erforderlichen Bauteilkisten bzw. GLTs 3 automatisch bestückt werden. Sechs Stellplätze P bzw. die Möglichkeit max. sechs Bauteilkisten/GLTs 3 pro Sequenzierungsbereich vorzusehen ist die bevorzugt, optimalste Variante, auf Grund des Zeitverbrauchs des Arbeiters der von Kiste zu Kiste gehen muss, Raumverbrauch etc. Im Sequenzierungsbereich S1H sind für den aktuellen Sequenzierungsauftrag nur drei GLT 3 bereitgestellt, drei Plätze P bleiben frei. Der Sequenzierungsbereich S2H ist noch in Arbeit, vier Stellplätze P sind derzeit noch frei und auf zwei Stellplätzen P steht bereits ein GLT 3, der Materialwechsel ist noch im Gange. Die GLTs 3 werden am AGL mittels Lift 4 - für Transport rauf, runter - und QVW 5 im Regal links und rechts bewegt. Der QVW 5 transportiert das GLT 3 in E0 an die richtige Position im jeweiligen Sequenzierungsbereich, dazu positioniert/schiebt das QVW das GLT 3 einfach von innen nach außen bzw. das so in der Mitte zwischen den beiden Regalreihen transportierte GLT 3 an der entsprechenden Position im jeweiligen Sequenzierungsbereich nach außen bzw. unter die Regalreihen - zum richtigen Sequenzierungsbereich S1V, S2V, S1H, S2H. Auf diese Weise wird der Arbeiter/Sequenzierer (zwischen Sequenzierungsgestellt 2 und AGL dargestellt) während des Austausches der GLTs 3 (weil ein neuer Sequenzierauftrag mit anderen Bauteilen ansteht oder ein GLT leer wird) bei seiner Sequenzierung nicht behindert. Er kann, beispielsweise wie in Fig. 2 dargestellt, den Auftrag im Sequenzierungsbereich S1H erledigen, während der Sequenzierungsbereich S2H für den nächsten Sequenzierungsauftrag vorbereitet wird. Stapler oder andere Personen, die sich dem Sequenzierungsbereich nähern, werden ebenfalls nicht behindert. Auf der anderen Seite des AGL ist ein weiterer Arbeiter/ Sequenzierer dargestellt, der gerade seinen Auftrag im Sequenzierbereich S1V abarbeitet und hierbei aus den vier ihm vom AGL zur Verfügung gestellten GLTs 3 die für seinen Sequenzierungsauftrag verfügbaren Teile/Material aus den dargestellten GLTs 3 entnimmt und in sein Sequenzierungsgestellt 2 legt. Während der Sequenzierungsbereich S2V für diesen Arbeiter/Sequenzierer für den nächsten Sequenzierungsauftrag vom AGL automatisch vorbereitet wird.

Das Picken von Teilen/Kleinladungsträgern aus den GLTs 3 zum Befüllen des Sequenzierungsgestells/-behälters 2 kann nicht nur manuell, durch Arbeiter, sondern auch automatisch, mittels Roboter, erfolgen.

Dabei kann bevorzugt eine "Einbahntransportstrategie" für die GLTs 3 verwendet werden, wie zuvor beschrieben.

### Bezugszeichenliste

- 1: Hochregallager
- 2: Sequenzierungsgestell
- 3: Großladungsträger
- 4: Lift
- 5: Querverschiebewagen
- 6: Übergabeplatz

- E0: Sequenzierungsebene
- E0L: Sequenzierungsebene links
- E0R: Sequenzierungsebene rechts
- E1, E2, E3, E4, E5: Lagerebenen
- P: Stellplatz
- P1: Pickstation 1
- P2: Pickstation 2
- S1: erster Sequenzierungsbereich
- S2: zweiter Sequenzierungsbereich
- S1V: erster vorderer Sequenzierungsbereich
- S2V: zweiter vorderer Sequenzierungsbereich
- S1H: erster hinterer Sequenzierungsbereich
- S2H: zweiter hinteren Sequenzierungsbereich

## Patentansprüche

1. Regalsystem zur Sequenzierung von Waren aus einem Hochregallager (1) in Sequenzierungsgestelle (2), umfassend ein Hochregallager (1) mit zumindest einer Sequenzierungsebene (E0), insbesondere in einer Bodenebene, und mehreren Lagerebenen (E1,.., E5), wobei an Stellplätzen in den Lagerebenen (E1,.., E5) im Normalbetrieb des Regalsystems Großladungsträger (3) gelagert sind, in welchen jeweils Waren eines Warentyps aufgenommen sind, wobei zumindest ein Lift (4) zur vertikalen Beförderung der Großladungsträger (3) im Hochregallager (1) angeordnet ist, wobei das Regalsystem in jeder Lagerebene (E1,.., E5) zumindest einen Querverschiebewagen (5) zur horizontalen Beförderung der Großladungsträger (3) umfasst, wobei das Hochregallager (1) als doppeltes Regal ausgeführt ist, so dass es ein vorderes Hochregal und ein dazu paralleles hinteres Hochregal umfasst, wobei das Regalsystem vier Lifte (4) oder vier Übergabeplätze (6) umfasst, wobei zwei Lifte (4) oder Übergabeplätze (6) zumindest mittelbar nebeneinander angeordnet sind und zur vertikalen Beförderung der Großladungsträger (3) des vorderen Hochregals eingerichtet sind und zwei Lifte (4) oder Übergabeplätze (6) zumindest mittelbar nebeneinander angeordnet sind und zur vertikalen Beförderung der Großladungsträger (3) des hinteren Hochregals eingerichtet sind, wobei
das Regalsystem eine Steuereinheit umfasst, **dadurch gekennzeichnet , dass** die Steuereinheit dazu eingerichtet ist, Sequenzierungsaufträge derart abzuarbeiten, dass die erforderlichen Großladungsträger (3) für einen Sequenzierungsauftrag aus den Lagerebenen (E1,.., E5) an zumindest einen zweiten Sequenzierungsbereich (S2) in der Sequenzierungsebene (E0) zugestellt werden, während Waren aus den erforderlichen Großladungsträgern (3) für einen anderen Sequenzierungsauftrag in einem ersten Sequenzierungsbereich (S1) in der Sequenzierungsebene (E0) in ein Sequenzierungsgestell (2) des ersten Sequenzierungsbereichs (S1) eingeordnet werden und umgekehrt, so dass die erforderlichen Großladungsträger (3) für einen Sequenzierungsauftrag aus den Lagerebenen (E1,.., E5) an den ersten Sequenzierungsbereich (S1) in der Sequenzierungsebene (E0) zugestellt werden, während Waren aus den erforderlichen Großladungsträgern (3) für einen anderen Sequenzierungsauftrag in dem zweiten Sequenzierungsbereich (S2) in der Sequenzierungsebene (E0) in ein Sequenzierungsgestell (3) des zweiten Sequenzierungsbereichs (S2) eingeordnet werden, wobei der Lift (4) entlang der Längserstreckung des Hochregallagers (1) im Inneren des Hochregallagers (1) angeordnet ist, sodass an einer Seite des Lifts (4) der erste Sequenzierungsbereich (S1) angeordnet ist und an der anderen Seite des Lifts (4) der zweite Sequenzierungsbereich (S2) angeordnet ist, wobei die Steuereinheit dazu eingerichtet ist, die jeweils erforderlichen Großladungsträger (3) für Sequenzierungsauftrage aus den Lagerebenen (E1,.., E5) an zumindest einen ersten und einen zweiten vorderen Sequenzierungsbereich (S1V, S2V) in der Sequenzierungsebene (E0), die dem vorderen Hochregal zugeordnet sind, zuzustellen, und die jeweils erforderlichen Großladungsträger (3) für Sequenzierungsauftrage aus den Lagerebenen (E1,.., E5) an zumindest einen ersten und einen zweiten hinteren Sequenzierungsbereich (S1H, S2H) in der Sequenzierungsebene (E0), die dem hinteren Hochregal zugeordnet sind, zuzustellen, wobei die Lifte (4) oder Übergabeplätze (6) so eingerichtet sind, dass die Großladungsträger (3) jeweils von einem der zwei Lifte (4) oder Übergabeplätze (6), die nebeneinander angeordnet sind, zum anderen der zwei Lifte (4) oder Übergabeplätze (6), die nebeneinander angeordnet sind, bewegt werden können, also den jeweiligen Platz wechseln können, wobei in jeder Lagerebene (E1,.., E5) die vorderen Lifte (4) oder Übergabeplätze (6) so eingerichtet sind, dass die Großladungsträger (3) jeweils in einer ersten Richtung von einem der zwei Lifte (4) oder Übergabeplätze (6), die nebeneinander angeordnet sind, zum anderen der zwei Lifte (4) oder Übergabeplätze (6), die nebeneinander angeordnet sind, den Platz wechseln und die hinteren Lifte (4) oder Übergabeplätze (6) so eingerichtet sind, dass die Großladungsträger (3) oder Übergabeplätze (6) jeweils in der zweiten Richtung, die der ersten Richtung entgegen gesetzt ist, den Platz wechseln, so dass die jeweils vorderen Lifte (4) oder Übergabeplätze (6) zum Transport in der anderen Richtung eingerichtet sind, als die jeweils hinteren Lifte (4) oder Übergabeplätze (6).

2. Regalsystem nach Anspruch 1,
**dadurch gekennzeichnet , dass** jeder Sequenzierungsbereich (S1, S2) zumindest einen Stellplatz (P) für Großladungsträger (3) umfasst, bevorzugt zumindest zwei Stellplätze (P), insbesondere drei bis zehn Stellplätze (P) für Großladungsträger (3) umfasst, besonders bevorzugt etwa sechs Stellplätze (P).

3. Regalsystem nach Anspruch 1 oder 2,
**dadurch gekennzeichnet , dass** der Lift (4) entlang der Längserstreckung des Hochregallagers (1) im Inneren des Hochregallagers (1) etwa mittig angeordnet ist.

4. Regalsystem nach Anspruch 3,
**dadurch gekennzeichnet , dass** das Regalsystem in jeder Sequenzierungsebene (E0) und/oder in jeder Lagerebene (E1,.., E5) zwei Querverschiebewagen (5) zur horizontalen Beförderung der Großladungsträger (3) umfasst, wobei jeweils ein Querverschiebewagen (5) für die Beförderung der Großladungsträger (3) in der Lagerebene (E1,.., E5) an einer Seite des Lifts (4) eingerichtet ist und der andere Querverschiebewagen (5) für die Beförderung der Großladungsträger (3) in der Lagerebene (E1,.., E5) an der anderen Seite des Lifts (4) eingerichtet ist.

5. Regalsystem nach Anspruch 4,
**dadurch gekennzeichnet , dass** die Querverschiebewagen (5) zwischen dem vorderen und dem hinteren Hochregal des Hochregallagers (1) angeordnet sind.

6. Regalsystem nach zumindest einem der Ansprüche 1 bis 5,
**dadurch gekennzeichnet , dass** der Platzwechsel für Übergabeplätze (6) mittelbar über einen Lift (4), und/oder wobei der Platzwechsel nach einem Wechsel der Ebene (E0,..,E5) durch einen Lift (4), erfolgen kann.

7. Regalsystem nach zumindest einem der Ansprüche 1 bis 6,
**dadurch gekennzeichnet , dass** das Regalsystem zwei Lifte (4) umfasst, wobei ein Lift (4) zur vertikalen Beförderung der Großladungsträger (3) des vorderen Hochregals eingerichtet ist und ein Lift (4) zur vertikalen Beförderung der Großladungsträger (3) des hinteren Hochregals eingerichtet ist.

8. Regalsystem nach Anspruch 7,
**dadurch gekennzeichnet , dass** das Regalsystem zwei Lifte (4) und vier Übergabeplätze (6) umfasst, wobei jeder der beiden Lifte (4) zwischen jeweils zwei Übergabeplätzen (6) angeordnet ist.

## Claims

1. Shelving system for sequencing goods from a high-bay warehouse (1) into sequencing racks (2), comprising a high-bay warehouse (1) with at least one sequencing level (E0), in particular at a floor level, and several storage levels (E1,.., E5), wherein large load carriers (3) are stored at storage locations in the storage levels (E1,.., E5) during normal operation of the shelving system, in each of which goods of one goods type are stored, wherein at least one lift (4) for the vertical transport of the large load carriers (3) is arranged in the high-bay warehouse (1), wherein the shelving system contains at least one transverse transfer carriage (5) system in each storage level (E1,.., E5) for the horizontal transport of the large load carriers (3), wherein the high-bay warehouse (1) is in the form of a double rack, so that it contains a front high rack and a parallel rear high rack, wherein the shelving system contains four lifts (4) or four transfer stations (6), wherein two lifts (4) or transfer stations (6) are arranged at least indirectly next to each other and are set up for the vertical transport of the large load carriers (3) of the front high rack and two lifts (4) or transfer stations (6) are arranged at least indirectly next to each other and are set up for the vertical transport of the large load carriers (3) of the rear high rack, wherein the shelving system contains a control unit, **characterized in that** the control unit is set up to process sequencing orders in such a way that the large load carriers (3) required for a sequencing order are sent from the storage levels (E1,.., E5) to at least one second sequencing area (S2) in the sequencing level (E0), while goods from the required large load carriers (3) for another sequencing order are placed in a first sequencing area (S1) in the sequencing level (E0) in a sequencing rack (2) of the first sequencing area (S1) and vice versa, so that the required large load carriers (3) for a sequencing order are delivered from the storage levels (E1,..., E5) to the first sequencing area (S1) in the sequencing level (E0), while goods from the required large load carriers (3) for another sequencing order are placed in order in the second sequencing area (S2) in the sequencing level (E0) in a sequencing rack (3) of the second sequencing area (S2) Wherein the lift (4) is arranged along the longitudinal extent of the high-bay warehouse (1) inside the high-bay warehouse (1), so that the first sequencing area (S1) is arranged on one side of the lift (4) and the second sequencing area (S2) is arranged on the other side of the lift (4), wherein the control unit is set up to deliver the required large load carriers (3) for sequencing orders from the storage levels (E1,.., E5) to at least a first and a second front sequencing area (S1V, S2V) in the sequencing level (E0) which are assigned to the front high rack, and to deliver the required large load carriers (3) for sequencing orders from the storage levels (E1,.., E5) to at least a first and a second rear sequencing area (S1H, S2H) in the sequencing level (E0) which are assigned to the rear high rack wherein the lifts (4) or transfer stations (6) are set up in such a way that the large load carriers (3) can be moved from one of the two lifts (4) or transfer stations (6), which are arranged next to each other, to another of the two lifts (4) or transfer stations (6), which are arranged next to each other i.e. they can change their respective place, wherein in each storage level (E1,.., E5), the front lifts (4) or transfer stations (6) are set up so that the large load carriers (3) can change places in a first direction from one of the two lifts (4) or transfer stations (6) arranged next to each other to another of the two lifts (4) or transfer stations (6) that are arranged next to each other, and the rear lifts (4) or transfer stations (6) are set up so that the large load carriers (3) or transfer stations (6) change places in the second direction, which is opposite to the first direction, so that the respective front lifts (4) or transfer stations (6) are set up for transport in the other direction than the respective rear lifts (4) or transfer stations (6).

2. Shelving system according to Claim 1,
**characterized in that** each sequencing area (S1, S2) contains at least one storage location (P) for large load carriers (3), preferably at least two storage locations (P), in particular three to ten storage locations (P) for large load carriers (3), particularly preferably about six storage locations (P).

3. Shelving system according to Claim 1 or 2,
**characterized in that** the lift (4) is arranged along the longitudinal extent of the high-bay warehouse (1) inside the high-bay warehouse (1), approximately in the middle.

4. Shelving system according to Claim 3,
**characterized in that** the shelving system contains two transverse transfer carriages (5) for the horizontal transport of the large load carriers (3) in each sequencing level (E0) and/or in each storage level (E1,.., E5), wherein one transverse transfer carriage (5) is set up for the transport of the large load carriers (3) in the storage level (E1,.., E5) on one side of the lift (4) and the other transverse transfer carriage (5) is set up for the transport of the large load carriers (3) in the storage level (E1, .., E5) on the other side of the lift (4).

5. Shelving system according to Claim 4,
**characterized in that** the transverse transfer carriages (5) are arranged between the front and rear high racks of the high-bay warehouse (1).

6. Shelving system according to at least one of Claims 1 to 5,
**characterized in that**, the change of place for transfer stations (6) can be carried out indirectly via a lift (4), and/or wherein the change of place can be carried out after a change of level (E0,..,E5) by means of a lift (4).

7. Shelving system according to at least one of Claims 1 to 6,
**characterized in that** the shelving system contains two lifts (4), wherein one lift (4) is set up for the vertical transport of the large load carriers (3) of the front high rack and one lift (4) is set up for the vertical transport of the large load carriers (3) of the rear high rack.

8. Shelving system according to Claim 7,
**characterized in that** the shelving system contains two lifts (4) and four transfer stations (6), wherein each of the two lifts (4) is arranged between two transfer stations (6).

## Revendications

1. Système de rayonnage pour le séquençage de marchandises d'un entrepôt à rayonnages hauts (1) en rayonnages de séquençage (2), comprenant un entrepôt à rayonnages hauts (1) avec au moins un niveau de séquençage (E0), en particulier à un niveau de sol, et plusieurs niveaux de stockage (E1, ..., E5), des supports de charge de grande taille (3) étant stockés sur des emplacements dans les niveaux de stockage (E1, ..., E5) lors du fonctionnement normal du système de rayonnage, dans lesquels des marchandises d'un type sont reçues, au moins un élévateur (4) pour le transport vertical des supports de charge de grande taille (3) étant disposé dans l'entrepôt à rayonnages hauts (1), le système de rayonnage comprenant au moins un chariot de déplacement transversal (5) pour le transport horizontal des supports de charge de grande taille (3) dans chaque niveau de stockage (E1, ..., E5), l'entrepôt à rayonnages hauts (1) étant réalisé comme un rayonnage double, de telle sorte qu'il comprend un rayonnage haut avant et un rayonnage haut arrière parallèle à celui-ci, le système de rayonnages comprenant quatre élévateurs (4) ou quatre emplacements de transfert (6), deux élévateurs (4) ou emplacements de transfert (6) étant disposés au moins indirectement côte à côte et étant mis au point pour le transport vertical des supports de charge de grande taille (3) du rayonnage haut avant et deux élévateurs (4) ou emplacements de transfert (6) étant disposés au moins indirectement côte à côte et étant mis au point pour le transport vertical des supports de charge de grande taille (3) du rayonnage haut arrière, le système de rayonnage comprenant une unité de commande, **caractérisé en ce que** l'unité de commande est mise au point pour traiter des ordres de séquençage de telle manière que les supports de charge de grande taille (3) nécessaires pour un ordre de séquençage sont amenés depuis les niveaux de stockage (E1, ..., E5) à au moins une deuxième zone de séquençage (S2) dans le niveau de séquençage (E0), tandis que des marchandises provenant des supports de charge de grande taille (3) nécessaires pour un autre ordre de séquençage sont classées dans une première zone de séquençage (S1) dans le niveau de séquençage (E0) dans un rack de séquençage (2) de la première zone de séquençage (S1) et vice versa, de telle sorte que les supports de charge de grande taille (3) nécessaires pour un ordre de séquençage sont amenés depuis les niveaux de stockage (E1, ...., E5) à la première zone de séquençage (S1) dans le niveau de séquençage (E0), tandis que des marchandises provenant des supports de charge de grande taille (3) nécessaires pour un autre ordre de séquençage dans la deuxième zone de séquençage (S2) dans le niveau de séquençage (E0) sont classées dans un rack de séquençage (3) de la deuxième zone de séquençage (S2), l'élévateur (4) étant disposé le long de l'extension longitudinale de l'entrepôt à rayonnage haut (1) à l'intérieur de l'entrepôt à rayonnage haut (1), si bien que la première zone de séquençage (S1) est disposée sur un côté de l'élévateur (4) et la deuxième zone de séquençage (S2) est disposée sur l'autre côté de l'élévateur (4),
l'unité de commande
étant mise au point pour amener les supports de charge de grande taille (3) respectivement nécessaires pour des ordres de séquençage depuis les niveaux de stockage (E1, ..., E5) à au moins une première et une deuxième zone de séquençage avant (S1V, S2V) dans le niveau de séquençage (E0) qui sont associées au rayonnage haut avant, et pour amener les supports de charge de grande taille (3) respectivement nécessaires pour des ordres de séquençage depuis les niveaux de stockage (E1, ..., E5) à au moins une première et une deuxième zone de séquençage arrière (S1H, S2H) dans le niveau de séquençage (E0), qui sont associées au rayonnage haut arrière,
les élévateurs (4) ou les emplacements de transfert (6) étant mis au point de telle sorte que les supports de charge de grande taille (3) peuvent être déplacés respectivement par l'un des deux élévateurs (4) ou emplacements de transfert (6), qui sont disposés l'un à côté de l'autre, vers l'autre des deux élévateurs (4) ou emplacements de transfert (6), qui sont disposés l'un à côté de l'autre, c'est-à-dire peuvent modifier l'emplacement respectif, les élévateurs avant (4) ou les emplacements de transfert (6) étant mis au point dans chaque niveau de stockage (E1, ..., E5) de telle sorte que les supports de charge de grande taille (3) changent chacun l'emplacement dans une première direction depuis un des deux élévateurs (4) ou emplacements de transfert (6), qui sont disposés l'un à côté de l'autre, vers l'autre des deux élévateurs (4) ou emplacements de transfert (6), qui sont disposés l'un à côté de l'autre, et les ascenseurs arrière (4) ou les emplacements de transfert (6) étant mis au point de telle sorte que les supports de charge de grande taille (3) ou les emplacements de transfert (6) changent chacun l'emplacement dans la deuxième direction qui est opposée à la première direction, de telle sorte que les élévateurs avant (4) ou les emplacements de transfert (6) respectifs sont mis au point pour le transport dans la direction autre que l'élévateur arrière (4) ou les emplacements de transfert (6) respectivement.

2. Système de rayonnage selon la revendication 1,
**caractérisé en ce que** chaque zone de séquençage (S1, S2) comprend au moins un emplacement de pose (P) pour des supports de charge de grande taille (3), de manière préférée au moins deux emplacements de pose (P), en particulier trois à dix emplacements de pose (P) pour des supports de charge de grande taille (3), de manière particulièrement préférée environ six emplacements de pose (P).

3. Système de rayonnage selon la revendication 1 ou 2,
**caractérisé en ce que** l'élévateur (4) est disposé à peu près au centre à l'intérieur de l'entrepôt à rayonnages hauts (1) le long de l'extension longitudinale de l'entrepôt à rayonnages hauts (1).

4. Système de rayonnage selon la revendication 3,
**caractérisé en ce que** le système de rayonnage comprend deux chariots de déplacement transversal (5) pour le transport horizontal des supports de charge de grande taille (3) dans chaque plan de séquençage (E0) et/ou dans chaque plan de stockage (E1, ..., E5), un chariot de déplacement transversal (5) étant mis au point pour le transport des supports de charge de grande taille (3) dans le plan de stockage (E1, ..., E5) sur un côté de l'élévateur (4) et l'autre chariot de déplacement transversal (5) étant mis au point pour le transport des supports de charge de grande taille (3) dans le niveau de stockage (E1, ..., E5) sur l'autre côté de l'élévateur (4).

5. Système de rayonnage selon la revendication 4,
**caractérisé en ce que** les chariots de déplacement transversal (5) sont disposés entre le rayonnage haut avant et le rayonnage haut arrière de l'entrepôt à rayonnages hauts (1).

6. Système de rayonnage selon au moins l'une des revendications 1 à 5,
**caractérisé en ce que** le changement d'emplacement pour des emplacements de transfert (6) peut s'effectuer indirectement par un élévateur (4) et/ou le changement d'emplacement pouvant s'effectuer après un changement de niveau (E0, ..., E5) par un élévateur (4).

7. Système de rayonnage selon au moins l'une des revendications 1 à 6,
**caractérisé en ce que** le système de rayonnages comprend deux élévateurs (4), un élévateur (4) étant mis au point pour le transport vertical des supports de charge de grande taille (3) du rayonnage haut avant et un élévateur (4) étant mis au point pour le transport vertical des supports de charge de grande taille (3) du rayonnage haut arrière.

8. Système de rayonnage selon la revendication 7,
**caractérisé en ce que** le système de rayonnage comprend deux élévateurs (4) et quatre emplacements de transfert (6), chacun des deux élévateurs (4) étant disposé entre deux emplacements de transfert (6) respectivement.
